# EUROPÄISCHE PATENTANMELDUNG

(11) **EP 4 432 169 A1**
(43) Veröffentlichungstag der Anmeldung: **18.09.2024**
(21) Anmeldenummer: 23162672.2
(22) Anmeldetag: 17.03.2023
(51) Int. Cl.: G06N 3/084, G06N 3/0985, G05B 13/02, G05B 17/02

(54) **VERFAHREN UND SYSTEM ZUM BETRIEB EINES TECHNISCHEN GERÄTS MIT EINEM META-LEARNING-MODELL**

(71) Anmelder: Siemens Aktiengesellschaft, 80333 München (DE)
(72) Erfinder: HOLLY, Stephanie, 2000 Stockerau (AT); EDER, Jana, 1180 Wien (AT); SCHALL, Daniel, 2020 Hollabrunn (AT)
(74) Vertreter: Siemens Patent Attorneys

(57) **Zusammenfassung**

Computer-implementiertes Verfahren zum Betrieb eines technischen Geräts (TD) mit einem Meta-Learning-Modell, wobei folgende Schritte ausgeführt werden:
a) Erzeugen und Initialisieren des Modells für das technische Gerät (TD),
b) Erzeugung einer Menge von Maschine Learning Aufgaben,
c) Auswählen zumindest einer Aufgabe (T) aus der Menge von Aufgaben,
d) Bestimmen einer ersten Teilmenge in Form von Stichproben, welche einen zulässigen Betriebsmodus aufweisen,
e) Bestimmen einer zweiten Teilmenge in Form von Stichproben, welche alle Betriebsmodi aufweisen,
f) Trainieren des Modells mit der ersten Teilmenge mithilfe von Aktualisierungen nach einem Gradienten-Verfahren,
g) Trainieren des Modells mit der zweiten Teilmenge, mithilfe von Aktualisierungen nach einem Gradienten-Verfahren
h) Bestimmen einer adaptierten zweiten Menge an Modell-Parametern (THETA') aus dem Modell mithilfe von Aktualisierungen nach einem Gradienten-Verfahren,
i) Fortsetzen bei Schritt d), solange, bis ein vorbestimmtes erstes Abbruchkriterium (N1) erreicht ist,
j) Durchführen eines Meta-Updates der ersten Menge an Modell-Parametern für das Modell mithilfe der adaptierten zweiten Menge an Modell-Parametern (THETA`) auf Basis der ersten Menge an Modell-Parametern (THETA),
k) Fortsetzen bei Schritt c), solange, bis ein vorbestimmte zweites Abbruchkriterium (N2) erreicht ist,
l) Erneutes Trainieren des Modells mit zumindest einer weiteren Aufgabe,
m) Betrieb des technischen Geräts (TD) mit dem Modell.

## Beschreibung

*Unabhängig vom grammatikalischen Geschlecht eines bestimmten Begriffes sind Personen mit männlicher, weiblicher oder anderer Geschlechteridentität mit umfasst.*

Die Erfindung betrifft ein computer-implementiertes Verfahren und ein System zum Betrieb eines technischen Geräts mit einem Meta-Learning-Modell, wobei das technische Gerät Betriebsmodi aufweist, welche durch jeweilige vorbestimmte Geräte-Parameter definiert sind, sowie ein Computer-Programm-Produkt.

Geräte im industriellen Umfeld werden häufig mit Modellen auf Basis künstlicher Intelligenz (kurz "KI") betrieben, um beispielsweise eine vorausschauende Wartung durchzuführen. Dies erfolgt indem mithilfe eines Modells aus aktuellen Betriebsparametern ein zukünftiger Betrieb prognostiziert wird.

Ein Modell muss aufwändig trainiert werden und ist dann häufig nur für eine Installation eines Geräts gültig. Wird also ein baugleiches Gerät anders installiert oder angeordnet, so muss nach dem Stand der Technik das Modell erneut aufwändig trainiert werden.

Es ist im Stand der Technik sehr schwierig, ein KI-Modell, das auf einem Gerät, wie einer Pumpe, trainiert wurde, welches sich in einer Umgebung befindet, auf das identische oder ähnliche Geräte in einer anderen Umgebung zu übertragen.

Das Umfeld beziehungsweise die Betriebsumgebung bezieht sich beispielsweise auf Einbauzustand, Verschraubung, Bodenbeschaffung oder benachbarte Anlagen. Die Umgebung kann die Daten beeinflussen und führt häufig unerwünscht zu anderen Datenverteilungen in den Messwerten.

Es ist Aufgabe der Erfindung eine Lösung bereitzustellen, in welcher ein Modell für ein Gerät auf einfache Weise erzeugt werden kann und das Modell dennoch genau ist, auch wenn es für einen zusätzliche Betriebsmodus nicht trainiert ist.

Die erfindungsgemäße Aufgabe wird durch ein computer-implementiertes Verfahren zum Betrieb eines technischen Geräts mit einem Meta-Learning-Modell gelöst, wobei das technische Gerät Betriebsmodi aufweist, welche durch jeweilige vorbestimmte Geräte-Parameter definiert sind, und folgende Schritte ausgeführt werden:
a) Erzeugen und Initialisieren des Modells für das technische Gerät in Betriebsumgebungen, welche durch jeweilige Betriebsparameter definiert sind, und das Modell durch eine erste Menge an Modell-Parametern definiert ist,
b) Erzeugung einer Menge von Maschine Learning Aufgaben, wobei eine Aufgabe aus der Menge von Aufgaben einen Betrieb des technischen Geräts in einer Betriebsumgebung mit Betriebsparametern definiert, und alle Aufgaben aus der Menge von Aufgaben in allen Betriebsmodi für das technische Gerät übereinstimmen,
c) Auswählen zumindest einer Aufgabe aus der Menge von Aufgaben,
d) Bestimmen einer ersten Teilmenge in Form von Stichproben mit einer vordefinierten ersten Anzahl an Aufgaben aus der Menge von Aufgaben, welche einen zulässigen Betriebsmodus aufweisen,
e) Bestimmen einer zweiten Teilmenge in Form von Stichproben mit einer vordefinierten zweiten Anzahl an Aufgaben aus der Menge von Aufgaben, welche alle Betriebsmodi aufweisen,
f) Trainieren des Modells mit der ersten Teilmenge mithilfe von Aktualisierungen nach einem Gradienten-Verfahren,
g) Trainieren des Modells mit der zweiten Teilmenge, mithilfe von Aktualisierungen nach einem Gradienten-Verfahren,
h) Bestimmen einer adaptierten zweiten Menge an Modell-Parametern aus dem Modell mithilfe von Aktualisierungen nach einem Gradienten-Verfahren,
i) Fortsetzen bei Schritt d), solange, bis ein vorbestimmtes erstes Abbruchkriterium erreicht ist,
j) Durchführen eines Meta-Updates der ersten Menge an Modell-Parametern für das Modell mithilfe der adaptierten zweiten Menge an Modell-Parametern auf Basis der ersten Menge an Modell-Parametern,
k) Fortsetzen bei Schritt c), solange, bis ein vorbestimmte zweites Abbruchkriterium erreicht ist,
l) Erneutes Trainieren des Modells mit zumindest einer weiteren Aufgabe,
m) Betrieb des technischen Geräts mit dem Modell.

Unter der Menge von Aufgaben sind Meta-Trainings-Aufgaben zu verstehen.

Unter der ersten Anzahl an Aufgaben aus der Menge von Aufgaben ist ein sogenanntes "Support Set" zu verstehen, welche einen zulässigen Betriebsmodus für das technische Gerät aufweisen.

Unter der zweiten Anzahl an Aufgaben aus der Menge von Aufgaben ist ein sogenanntes "Query Set" zu verstehen, welche alle Betriebsmodi für das technische Gerät aufweisen.

Das erste und/oder das zweite Abbruchkriterium kann sich auf ein minimales Maß an Änderungen in dem Gradienten-Verfahren beziehen, im Sinne einer Konvergenz.

Dadurch ist es möglich ein KI-Modell beispielsweise in einer Laborumgebung mit zulässigen Betriebsmodi zu trainieren und dieses KI-Modell dann auf eine Neuinstallation in einer hohen Genauigkeit des Modells zu übertragen, ohne dass das Modell angepasst oder neu trainiert werden muss (Plug & Classify).

Dies ermöglicht die Skalierung von KI-Modellen in industriellen Anwendungen, indem Modelle ohne Mehraufwand wiederverwendet werden können.

Das Training des technischen Geräts kann alle Betriebsfälle umfassen, sowohl zulässige Betriebsmodi als auch unzulässige Betriebsmodi, welche beispielsweise eine Betriebsanomalie hervorrufen können.

Betriebsumgebungen können beispielsweise die Montage des technischen Geräts, sowie eine Leitungsführung oder auch Einflüsse benachbarter Vorrichtungen abbilden.

Meta-Learning im maschinellen Lernen bezeichnet Lernalgorithmen, die von anderen Lernalgorithmen lernen. Dabei können auch Algorithmen für maschinelles Lernen verwendet werden, welche lernen, wie man die Vorhersagen anderer Algorithmen für maschinelles Lernen im Bereich des Ensemble-Lernens am besten kombiniert.

In einer Weiterbildung der Erfindung ist es vorgesehen, dass das Gradienten-Verfahren der Gradient-Descent-Algorithmus ist.

Dadurch wird erreicht, dass auf besonders effiziente Weise eine rasche Konvergenz des iterativen oder rekursiven Verfahrens erzielt wird.

In einer Weiterbildung der Erfindung ist es vorgesehen, dass das Trainieren des Modells mit der zweiten Teilmenge mithilfe einer Aktualisierung nach einem modifizierten Gradient-Descent-Algorithmus erfolgt, vorzugsweise anhand von Ableitungen zweiter Ordnung.

Dadurch wird erreicht, dass auf besonders effiziente Weise eine besonders rasche Konvergenz des iterativen oder rekursiven Verfahrens erzielt wird.

In einer Weiterbildung der Erfindung ist es vorgesehen, dass das Bestimmen der adaptierten zweiten Menge an Modell-Parametern mithilfe einer Aktualisierung nach einem modifizierten Gradient-Descent-Algorithmus erfolgt.

Dadurch wird erreicht, dass auf besonders effiziente Weise eine weiter verbesserte und rasche Konvergenz des iterativen oder rekursiven Verfahrens erzielt wird.

In einer Weiterbildung der Erfindung ist es vorgesehen, dass das vorbestimmte erstes Abbruchkriterium das Erreichen einer vorbestimmten ersten Anzahl an Wiederholungen ist.

Dadurch wird erreicht, dass auf besonders einfache Weise ein einfach zu implementierendes Kriterium für das iterative oder rekursiven Verfahren erzielt wird.

In einer Weiterbildung der Erfindung ist es vorgesehen, dass das vorbestimmte zweite Abbruchkriterium das Erreichen einer vorbestimmten zweiten Anzahl an Wiederholungen ist.

Dadurch wird erreicht, dass auf besonders einfache Weise ein einfach zu implementierendes Kriterium für das iterative oder rekursiven Verfahren erzielt wird.

In einer Weiterbildung der Erfindung ist es vorgesehen, dass die Geräte-Parameter eine Kombination von Geräte-Kenngrößen und/oder einen Werte-Bereich für zumindest eine Geräte-Kenngröße umfassen.

Dadurch wird erreicht, dass auf besonders effiziente Weise eine weiter verbesserte und rasche Konvergenz des iterativen oder rekursiven Verfahrens erzielt wird.

Das Initialisieren des Modells im Schritt a) kann mithilfe vorbestimmter Initialisierungs-Werte erfolgen.

In einer Weiterbildung der Erfindung ist es vorgesehen, dass das Initialisieren des Modells im Schritt a) mit zufälligen Werten erfolgt.

Mit anderen Worten können die vorbestimmten Initialisierungs-Werte Zufalls-Werte sein.

Dadurch kann die Initialisierung auf besonders einfache Weise erfolgen.

Das Auswählen zumindest einer Aufgabe im Schritt c) kann mithilfe einer vorbestimmten Auswahl erfolgen.

In einer Weiterbildung der Erfindung ist es vorgesehen, dass das Auswählen zumindest einer Aufgabe im Schritt c) zufällig erfolgt.

Mit anderen Worten kann die vorbestimmte Auswahl durch Zufalls-Werte bestimmt sein.

Dadurch kann die Auswahl auf besonders einfache Weise erfolgen.

Die erfindungsgemäße Aufgabe wird durch ein System zum Betrieb eines technischen Geräts mit einem Meta-Learning-Modell, umfassend eine Rechenvorrichtung mit einem Prozessor und einem Speicher, welche dazu eingerichtet ist, das technische Gerät zu betreiben, und das System dazu konfiguriert ist, das erfindungsgemäße Verfahren auszuführen.

Die erfindungsgemäße Aufgabe wird durch ein Computer-Programm-Produkt mit darin gespeicherten maschinenlesbaren Anweisungen gelöst, die, wenn sie von einer Verarbeitungseinheit ausgeführt werden, diese veranlassen, das erfindungsgemäße Verfahren auszuführen.

Die Erfindung wird nachfolgend anhand eines in den beigeschlossenen Zeichnungen dargestellten Ausführungsbeispiels näher erläutert. In den Zeichnungen zeigt:
- Fig. 1: ein Ausführungsbeispiel der Erfindung als Programmcode,
- Fig. 2: eine schematische Darstellung eines Systems zum Betrieb eines technischen Geräts mit einem Modell auf Basis künstlicher Intelligenz mit den jeweiligen Eingangsgrößen,
- Fig. 3: ein Flussdiagramm des erfindungsgemäßen Verfahrens.

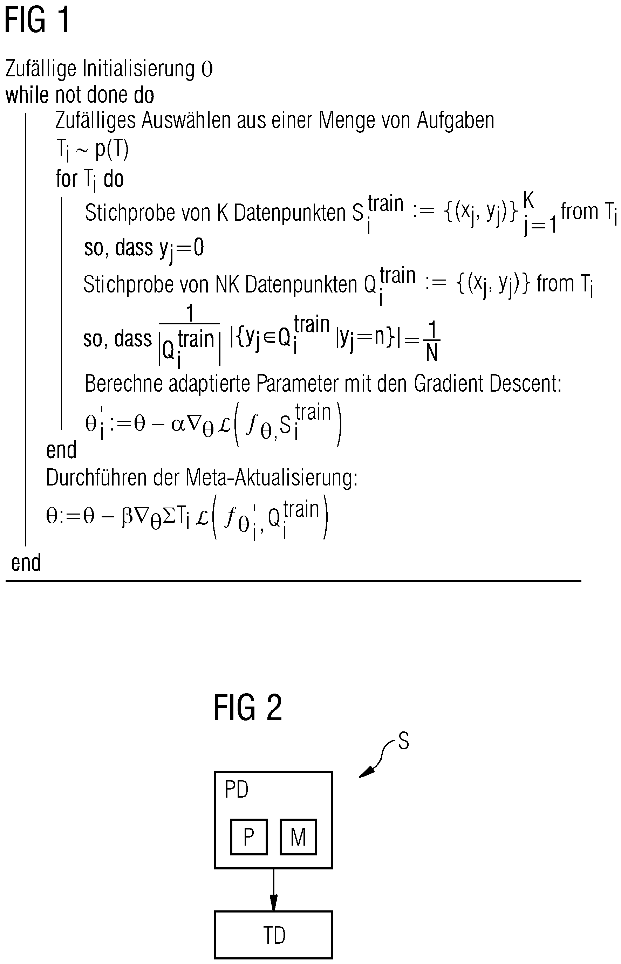

**Fig. 1** zeigt ein Ausführungsbeispiel für ein computer-Programm-Produkt in Form eines Programmcodes, bei welchem ein Meta-Lernen anhand von einer oder weiniger Klassen durchgeführt wird.

Eine Menge von Aufgaben T wird bereitgestellt, welche eine Verteilung p(T) über die Aufgaben hinweg aufweist.

Eine Modell-Architektur *f_{θ}*, welche durch den Parameter *θ* einstellbar ist.

Ferner ist eine Verlustfunktion 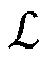 vorgegeben, sowie eine Schrittgröße der Hyperparameter *α*, *β.*

Eine Gesamt-Anzahl an Klassen N ist zur einfachen Realisierung vorgegeben.

**Fig. 2** zeigt eine schematische Darstellung eines Systems zum Betrieb eines technischen Geräts mit einem Meta-Learning-Modell.

Das System umfasst eine Rechenvorrichtung mit einem Prozessor und einem Speicher, welche dazu eingerichtet ist, das technische Gerät zu betreiben.

Das System ist dazu konfiguriert das im Nachfolgenden beschriebene Verfahren auszuführen.

Auf Basis des Systems kann auch ein computer-Programm-Produkt mit darin gespeicherten maschinenlesbaren Anweisungen bereitgestellt werden, die, wenn sie von einer Verarbeitungseinheit ausgeführt werden, diese veranlassen, das erfindungsgemäße Verfahren auszuführen.

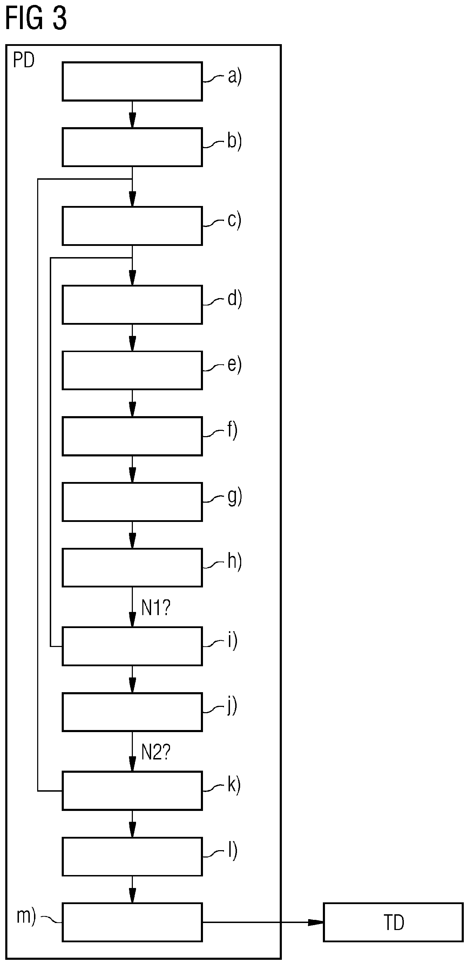

**Fig. 3** stellt ein Flussdiagramm des erfindungsgemäßen Verfahrens dar.

Das computer-implementiertes Verfahren zum Betrieb eines technischen Geräts TD mit einem Meta-Learning-Modell, wobei das technische Gerät Betriebsmodi aufweist, welche durch jeweilige vorbestimmte Geräte-Parameter definiert sind, umfasst folgende Schritte:
a) Erzeugen und zufälliges Initialisieren des Modells für das technische Gerät TD in Betriebsumgebungen, welche durch jeweilige Betriebsparameter definiert sind, und das Modell durch eine erste Menge an Modell-Parametern THETA definiert ist,
b) Erzeugung einer Menge von Maschine Learning Aufgaben, wobei eine Aufgabe aus der Menge von Aufgaben einen Betrieb des technischen Geräts TD in einer Betriebsumgebung mit Betriebsparametern definiert, und alle Aufgaben aus der Menge von Aufgaben in allen Betriebsmodi für das technische Gerät TD übereinstimmen,
c) Zufälliges Auswählen zumindest einer Aufgabe T aus der Menge von Aufgaben,
d) Bestimmen einer ersten Teilmenge in Form von Stichproben mit einer vordefinierten ersten Anzahl K1 an Aufgaben aus der Menge von Aufgaben, welche einen zulässigen Betriebsmodus aufweisen, auch als "Support Set" bezeichnet,
e) Bestimmen einer zweiten Teilmenge in Form von Stichproben mit einer vordefinierten zweiten Anzahl K2 an Aufgaben aus der Menge von Aufgaben, welche alle Betriebsmodi aufweisen, auch als "Query Set",
f) Trainieren des Modells mit der ersten Teilmenge mithilfe von Aktualisierungen nach einem Gradienten-Verfahren,
g) Trainieren des Modells mit der zweiten Teilmenge, mithilfe von Aktualisierungen nach einem Gradienten-Verfahren
h) Bestimmen einer adaptierten zweiten Menge an Modell-Parametern THETA' aus dem Modell mithilfe von Aktualisierungen nach einem Gradienten-Verfahren,
i) Fortsetzen bei Schritt d), solange, bis ein vorbestimmtes erstes Abbruchkriterium N1 erreicht ist,
j) Durchführen eines Meta-Updates der ersten Menge an Modell-Parametern für das Modell mithilfe der adaptierten zweiten Menge an Modell-Parametern THETA` auf Basis der ersten Menge an Modell-Parametern THETA,
k) Fortsetzen bei Schritt c), solange, bis ein vorbestimmte zweites Abbruchkriterium N2 erreicht ist,
l) Erneutes Trainieren des Modells mit zumindest einer weiteren Aufgabe,
m) Betrieb des technischen Geräts TD mit dem Modell.

Das Initialisieren des Modells im Schritt a) erfolgt mit zufälligen Werten. Alternativ können beispielsweise aber auch vorbestimmte Werte verwendet werden.

Das Auswählen zumindest einer Aufgabe im Schritt c) erfolgt zufällig. Alternativ können beispielsweise aber auch vorbestimmte Aufgaben verwendet werden, wie beispielsweise durch eine vorbestimmte Reihenfolge in einer verwendeten Datenstruktur zum Speichern der Menge an Aufgaben.

Das Gradienten-Verfahren ist bevorzugt der Gradient-Descent-Algorithmus.

Das Trainieren des Modells mit der zweiten Teilmenge kann beispielsweise mithilfe einer Aktualisierung nach einem modifizierten Gradient-Descent-Algorithmus erfolgen, vorzugsweise anhand von Ableitungen zweiter Ordnung.

Das Bestimmen der adaptierten zweiten Menge an Modell-Parametern kann beispielsweise mithilfe einer Aktualisierung nach einem modifizierten Gradient-Descent-Algorithmus erfolgen.

Das vorbestimmte erste Abbruchkriterium kann das Erreichen einer vorbestimmten ersten Anzahl N1 an Wiederholungen sein.

Das vorbestimmte zweite Abbruchkriterium kann das Erreichen einer vorbestimmten zweiten Anzahl N2 an Wiederholungen sein. Die Geräte-Parameter können eine Kombination von Geräte-Kenngrößen und/oder einen Werte-Bereich für zumindest eine Geräte-Kenngröße umfassen.

### Bezugszeichenliste:

*f_{θ}* Modell-Architektur
K1, K2 Anzahl an Aufgaben
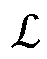 Verlustfunktion
M Speicher
N Gesamt-Anzahl an Klassen
N1, N2 Anzahl an Wiederholungen
p(T) Verteilungsfunktion über die Aufgaben
PD Rechenvorrichtung
P Prozessor
S Stichprobe
T Aufgabe, Task
TD technisches Gerät
THETA (*θ*), THETA` (*θ'*) Modell-Parameter, modifizierter Modell-Parameter
*α, β* Hyperparameter

## Patentansprüche

1. Computer-implementiertes Verfahren zum Betrieb eines technischen Geräts (TD) mit einem Meta-Learning-Modell, wobei das technische Gerät Betriebsmodi aufweist, welche durch jeweilige vorbestimmte Geräte-Parameter definiert sind, und folgende Schritte ausgeführt werden:
a) Erzeugen und Initialisieren des Modells für das technische Gerät (TD) in Betriebsumgebungen, welche durch jeweilige Betriebsparameter definiert sind, und das Modell durch eine erste Menge an Modell-Parametern (THETA) definiert ist
b) Erzeugung einer Menge von Maschine Learning Aufgaben, wobei eine Aufgabe aus der Menge von Aufgaben einen Betrieb des technischen Geräts (TD) in einer Betriebsumgebung mit Betriebsparametern definiert, und alle Aufgaben aus der Menge von Aufgaben in allen Betriebsmodi für das technische Gerät (TD) übereinstimmen
c) Auswählen zumindest einer Aufgabe (T) aus der Menge von Aufgaben,
d) Bestimmen einer ersten Teilmenge in Form von Stichproben mit einer vordefinierten ersten Anzahl (K1) an Aufgaben aus der Menge von Aufgaben, welche einen zulässigen Betriebsmodus aufweisen,
e) Bestimmen einer zweiten Teilmenge in Form von Stichproben mit einer vordefinierten zweiten Anzahl (K2) an Aufgaben aus der Menge von Aufgaben, welche alle Betriebsmodi aufweisen,
f) Trainieren des Modells mit der ersten Teilmenge mithilfe von Aktualisierungen nach einem Gradienten-Verfahren,
g) Trainieren des Modells mit der zweiten Teilmenge, mithilfe von Aktualisierungen nach einem Gradienten-Verfahren
h) Bestimmen einer adaptierten zweiten Menge an Modell-Parametern (THETA`) aus dem Modell mithilfe von Aktualisierungen nach einem Gradienten-Verfahren,
i) Fortsetzen bei Schritt d), solange, bis ein vorbestimmtes erstes Abbruchkriterium (N1) erreicht ist,
j) Durchführen eines Meta-Updates der ersten Menge an Modell-Parametern für das Modell mithilfe der adaptierten zweiten Menge an Modell-Parametern (THETA') auf Basis der ersten Menge an Modell-Parametern (THETA),
k) Fortsetzen bei Schritt c), solange, bis ein vorbestimmte zweites Abbruchkriterium (N2) erreicht ist,
l) Erneutes Trainieren des Modells mit zumindest einer weiteren Aufgabe,
m) Betrieb des technischen Geräts (TD) mit dem Modell.

2. Verfahren nach dem vorhergehenden Anspruch, wobei das Gradienten-Verfahren der Gradient-Descent-Algorithmus ist.

3. Verfahren nach Anspruch 2, wobei das Trainieren des Modells mit der zweiten Teilmenge mithilfe einer Aktualisierung nach einem modifizierten Gradient-Descent-Algorithmus erfolgt, vorzugsweise anhand von Ableitungen zweiter Ordnung.

4. Verfahren nach einem der Ansprüche 2 oder 3, wobei das Bestimmen der adaptierten zweiten Menge an Modell-Parametern mithilfe einer Aktualisierung nach einem modifizierten Gradient-Descent-Algorithmus erfolgt.

5. Verfahren nach einem der vorhergehenden Ansprüche, wobei das vorbestimmte erstes Abbruchkriterium das Erreichen einer vorbestimmten ersten Anzahl (N1) an Wiederholungen ist.

6. Verfahren nach einem der vorhergehenden Ansprüche, wobei das vorbestimmte zweite Abbruchkriterium das Erreichen einer vorbestimmten zweiten Anzahl (N2) an Wiederholungen ist.

7. Verfahren nach einem der vorhergehenden Ansprüche, wobei die Geräte-Parameter eine Kombination von Geräte-Kenngrößen und/oder einen Werte-Bereich für zumindest eine Geräte-Kenngröße umfassen.

8. Verfahren nach einem der vorhergehenden Ansprüche, wobei das Initialisieren des Modells mit zufälligen Werten erfolgt.

9. Verfahren nach einem der vorhergehenden Ansprüche, wobei das Auswählen zumindest einer Aufgabe (T) zufällig erfolgt.

10. System zum Betrieb eines technischen Geräts mit einem Meta-Learning-Modell, umfassend eine Rechenvorrichtung (PD) mit einem Prozessor und einem Speicher, welche dazu eingerichtet ist, das technische Gerät zu betreiben, und das System dazu konfiguriert ist, das Verfahren nach einem der vorhergehenden Ansprüche auszuführen.

11. Computer-Programm-Produkt mit darin gespeicherten maschinenlesbaren Anweisungen, die, wenn sie von einer Verarbeitungseinheit ausgeführt werden, diese veranlassen, das Verfahren nach einem der Ansprüche 1 bis 9 auszuführen.
